# EUROPEAN PATENT SPECIFICATION

(11) **EP 4 372 328 B1**
(45) Date of publication and mention of the grant of the patent: **22.04.2026**
(21) Application number: 22208327.1
(22) Date of filing: 18.11.2022
(51) Int. Cl.: G01F 23/28, G01F 23/80

(54) **LEVEL MEASUREMENT SYSTEM**
FÜLLSTANDSMESSSYSTEM
SYSTÈME DE MESURE DE NIVEAU

(43) Date of publication of application: 22.05.2024
(73) Proprietor: Rosemount Tank Radar AB, 435 23 Mölnlycke (SE)
(72) Inventor: PREISIG, Nicolas, 444 95 ÖDSMÅL (SE); WIDAHL, Christoffer, 426 70 VÄSTRA FRÖLUNDA (SE)
(74) Representative: Kransell & Wennborg KB

(56) References cited:
- DE-A1- 102020 134 382
- US-A1- 2022 206 034

## Description

### Technical Field of the Invention

The present invention relates to a level measurement system.

### Technical Background

There are various situations where it would be desirable to keep track of the status of each tank in a geographically distributed plurality of tanks. For example, a product availability service provider may have offered the service of ensuring that each tank in the geographically distributed plurality of tanks always contains a minimum amount of product. The product and the minimum amount may be specific to each particular tank.

To be able to conveniently provide this exemplary service, the product availability service provider may use an asset management system, which may keep a record for each tank indicating the product and the latest reported level of product in the tank. To keep the record for a given tank up to date, the asset management system may periodically receive an updated measured level of product in that tank from a level measurement system arranged to measure the level of product in that tank.

When the updated measured level of product in a tank indicates that the tank should soon be refilled, the asset management system may create a work order and provide that work order to an operator. The operator may then bring a mobile vessel (such as a tanker truck) with the relevant product to the location of the tank, and fill the tank with the correct product for that tank.

Since there may be several tanks, which may be more or less identical, at the location specified in the work order, there is a risk that the operator inadvertently starts to fill the wrong tank with the product. This would result in the product availability service not being provided. Additionally, an overfill situation may occur in another tank, or there may even be a potentially harmful mix of different products.

It would be desirable to improve the ability to at least detect this kind of operator error.

US 2022/206034 A1 relates to a field device for determining a process variable, the field device including: a sensor circuitry configured to sense a measured value of the process variable; a communication circuitry configured to transmit the measured value wirelessly to a receiver; a position determination circuitry configured to determine a geographic position of the field device; and a control circuitry configured to determine, as a function of a current geographical position of the field device, at least one of: (a) a current measurement rate at which the sensor circuitry acquires measured values of the process variable, and (b) a current data transmission rate at which the communication circuitry transmits measured values to the receiver.

### Summary

In view of the above, a general object of the present invention is to improve the ability to at least detect that an operator inadvertently starts to fill the wrong tank with product.

According to the present invention, it is therefore provided a level measurement system, for measuring the level of a product in a tank being monitored by an asset management system, the level measurement system comprising: level sensing circuitry for measuring the level of the product; wireless communication circuitry for wireless communication; and a controller for controlling operation of the level measurement system, the controller being configured to: control the sensing circuitry to periodically measure the level of the product with a first measurement frequency; transmit a signal indicative of the measured level of the product, using the wireless communication circuity; receive, from the asset management system using the wireless communication circuitry, an indication of a work order for filling a neighboring tank within a predefined distance from the tank; and control, after having received the indication of the work order, the level sensing circuitry to periodically measure the level of the product with a second measurement frequency, higher than the first measurement frequency.

The present invention is based on the realization that a long battery life for a wireless level measurement system can be combined with the desired improved ability to detect operator error in connection with tank filling (partial or full filling, in other words adding product to the tank), by controlling the level measurement system of the tank to measure the level of the product in the tank more frequently when filling of a neighboring tank is anticipated. The level measurement system can then operate with a very low energy consumption during time periods when the risk of operator error in connection with tank filling is very low, and operate with a higher energy consumption during the, relatively very short, time periods when the risk of such operator error is elevated, that is, during time periods when tank filling is intended. Through embodiments of the present invention, it can be detected if the operator tasked with the work order for filling a particular tank instead starts to fill another tank nearby, that is provided with the level measurement system according to embodiments of the present invention.

In embodiments, the controller may be configured to provide, in response to a detection of an increasing level of product in the tank, a signal indicative thereof. In other embodiments, a wireless operator device of the operator tasked by the asset management system to fulfill the work order and/or the asset management system may receive, from the level measurement system, signals indicative of a sequence of measured levels. If these signals indicate an increasing level, the wireless operator device and/or the asset management system may provide an alert to the operator.

It should be noted that the indication of a work order for filling the neighboring tank may be explicit or implicit. For instance, a command from the asset management system to increase the measurement frequency from the first measurement frequency to the second measurement frequency may be an implicit indication of a work order for filling the neighboring tank.

Furthermore, it should be understood that the indication of a work order for filling the neighboring tank may be received directly or indirectly from the asset management system. When the indication of a work order for filling the neighboring tank is received indirectly from the asset management system, the asset management system may have sent the work order to a wireless operator device of an operator tasked to fulfill the work order, and the indication of the work order may be directly received, by the level measurement system, from the wireless operator device.

Moreover, the controller of the level measurement system may be configured to control the sensing circuitry to periodically measure the level of the product in the tank with the second measurement frequency immediately upon receipt of the indication of the work order for filling the neighboring tank, or with an adequate delay. The timing for controlling the level sensing circuitry to increase the measurement frequency may depend on the type of indication of the work order and/or whether or not the indication is direct or indirect as described above, etc.

Advantageously, the level measurement system may be in an inactive state between level measurement operations. In the inactive state, the level sensing circuitry, at least part of the wireless communication circuitry, and part of the controller may be put to sleep, resulting in a very low power consumption of the level measurement system. When it is time for a scheduled level measurement event, the active part of the controller may wake up the sleeping parts of the level measurement system, control the level sensing circuitry to measure the level of the product, and transmit a signal indicative of the measured level of the product to the asset management system using the wireless communication circuitry. While the wireless communication circuitry of the level measurement system is active, it may also receive data, such as instructions, requests, and/or configuration data from the asset management system. Such data may, for example, encode an instruction to change the configuration of the level measurement system (such as to change the measurement frequency), and/or information about an operator ID of the operator (or the wireless operator device of the operator) tasked to fulfill the work order for filling the neighboring tank.

In various embodiments of the level measurement system according to the present invention, the wireless communication circuitry may advantageously comprise first wireless communication circuitry configured to implement a first communication architecture adapted for relatively long range wireless communication; and second wireless communication circuitry configured to implement a second communication architecture adapted for relatively short range wireless communication, with a shorter range than when the first wireless communication circuitry is used.

The first wireless communication circuitry may require more power for operation than the second wireless communication circuitry. It may therefore be more important to minimize the active time for the first wireless communication circuitry than to minimize the active time for the second wireless communication circuitry. For instance, the first wireless communication circuitry may be active only when activated by (part of) the controller as described above, and the second wireless communication circuitry may always be active, or may be activated in response to receipt of the above-mentioned indication of a work order for filling the neighboring tank, and/or in response to receipt of an indication of a work order for filling the tank provided with the level measurement system according to embodiments of the present invention.

According to embodiments of the level measurement system of the present invention, the controller may be configured to receive the indication of the work order for filling the neighboring tank using the first wireless communication circuitry. In these embodiments, due to the relatively long range capabilities of the first wireless communication circuitry, the level measurement system may receive the indication of the work order directly from the asset management system.

According to other embodiments, the controller may be configured to receive the indication of the work order for filling the neighboring tank using the second wireless communication circuitry. Due to the relatively short range capabilities of the second wireless communication circuitry, the level measurement system may, in these embodiments, receive the indication of the work order from the asset management system, via a wireless operator device of an operator tasked by the asset management system to fulfill the work order.

For example, the indication of the work order for filling the neighboring tank may be a pairing request received from the wireless operator device, or a successful pairing performed as a result of the pairing request may be the indication of the work order.

Alternatively, the level measurement system may receive the indication of the work order from the asset management system, via the level measurement system of the neighboring tank, for which the work order has been issued. For example, the indication of the work order for filling the neighboring tank may be a pairing request received from the level measurement system of the neighboring tank, or a successful pairing performed as a result of the pairing request may be the indication of the work order.

After having established short range (close range) communication with the wireless operator device and/or the level measurement system of the neighboring tank, the controller of the level measurement system may be configured to transition the level sensing circuitry from an inactive state (such as sleep) to an active state. When the level sensing circuitry has been activated, filling level measurements can be performed, such as periodically with the second measurement frequency.

According to embodiments, the controller may be configured to: receive, from the asset management system using the wireless communication circuitry, an indication of a work order for filling the tank that is provided with the level measurement system; and control, after having received the indication of the work order, the level sensing circuitry to periodically measure the level of the product with a third measurement frequency, higher than the first measurement frequency. The third measurement frequency may be the same as the second measurement frequency.

In these embodiments, the level measurement system has the added functionality of enabling detection of operator error in connection with a work order for filling of the tank being provided with the level measurement system.

The level sensing circuitry comprised in the level measurement system may advantageously comprise transceiver circuitry configured to generate a transmit signal, transmit the transmit signal, and receive a reflection signal, and sensing processing circuitry configured to determine the level of the product based on a timing relation between the transmit signal and the reflection signal. The transmit signal may, for example be an electromagnetic signal (such as radar or lidar) or an acoustic signal (such as ultrasonic).

### Brief Description of the Drawings

These and other aspects of the present invention will now be described in more detail, with reference to the appended drawings showing embodiments of the invention, wherein:
Fig 1 is a schematic illustration of geographically distributed tanks and an asset management system keeping records of the status of each tank and creating work orders for filling tanks as needed;
Fig 2 schematically shows an exemplary tank with a level measurement system installed;
Fig 3 is a schematic illustration of a level measurement system according to a first embodiment of the present invention;
Fig 4 is a schematic illustration of a level measurement system according to a second embodiment of the present invention;
Fig 5 is an exemplary illustration of an operator tasked with fulfilling a work order at a site with multiple tanks;
Fig 6 schematically shows wireless communication involving the level measurement system according to embodiments of the present invention, the level measurement system of a neighboring tank, an operator device, and the asset management system;
Fig 7 is an exemplary interaction diagram for interactions involving the level measurement system according to embodiments of the present invention, the level measurement system of the neighboring tank to be filled, the operator device, and the asset management system;
Fig 8A schematically illustrates measurement operations performed by the level measurement system of the neighboring tank to be filled; and
Fig 8B schematically illustrates measurement operations performed by the level measurement system according to embodiments of the present invention.

### Detailed Description of Example Embodiments of the Invention

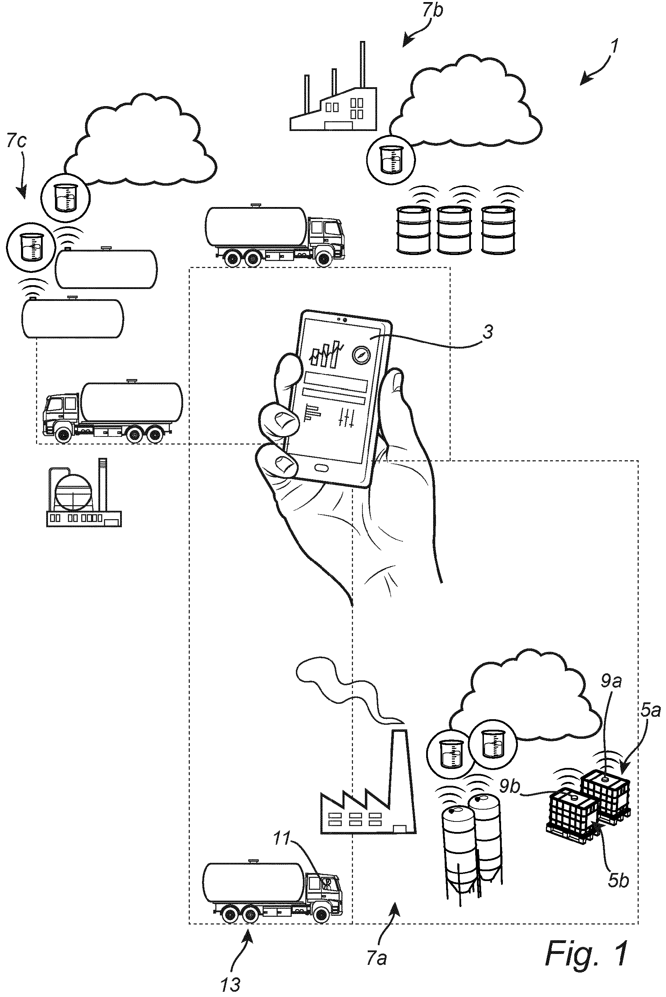

Fig 1 is a schematic illustration of an asset management system 1, and assets that may be managed by the asset management system 1. The asset management system 1 is here embodied in the form of software running on servers (represented by the clouds in fig 1) and on client devices (represented by a mobile device 3 of an asset management system operator in fig 1). Assets are represented by tanks 5a-b (only two of the tanks are provided with reference numerals in fig 1 to avoid cluttering the drawing) grouped at different locations 7a-c. As was mentioned in the Background section, the asset management system 1 may, for example, be used by a product availability provider. To ensure that each tank 5a-b always contains a minimum amount of product, the asset management system 1 may periodically receive an updated measured level of product in each tank 5a-b from a level measurement system 9a-b arranged to measure the level of product in that tank 5a-b. When the updated measured level of product in a tank 5a-b indicates that the tank should soon be refilled, the asset management system 1 may create a work order and provide that work order to an operator 11. The operator 11 may then bring a mobile vessel 13 (such as a tanker truck) with the relevant product to the location 7a-c of the tank 5a-b, and fill the tank 5a-b with the correct product for that tank.

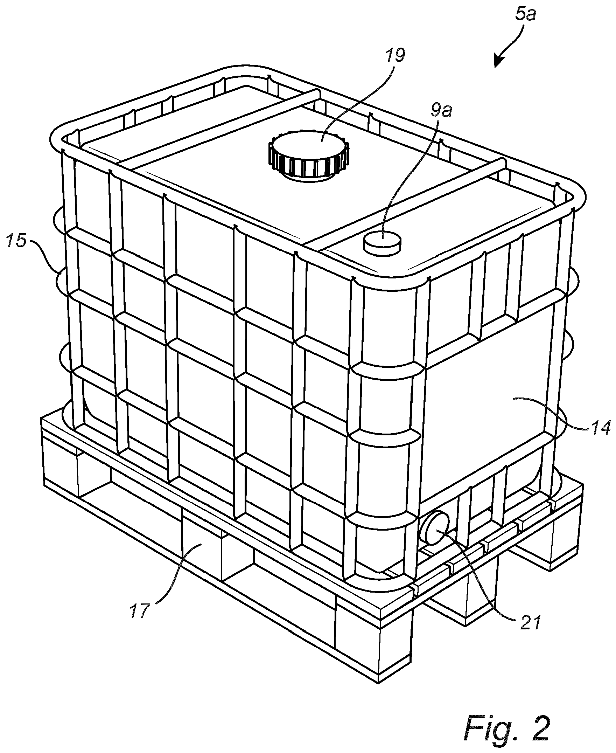

Fig 2 schematically shows an exemplary tank 5a (in this case a so-called IBC-tank) with a level measurement system installed. Referring to fig 2, the IBC-tank 5a comprises a plastic container 14, a metal cage 15, and a pallet 17. The plastic container 14 is provided with a top opening 19 for filling product and a bottom opening 21 for emptying product. As is schematically illustrated in fig 2, the IBC-tank 5a is further provided with the above-mentioned level measurement system 9a that is, in this particular configuration, attached to the IBC-tank 5a for measuring the level of product in the tank through the wall of the plastic container 14.

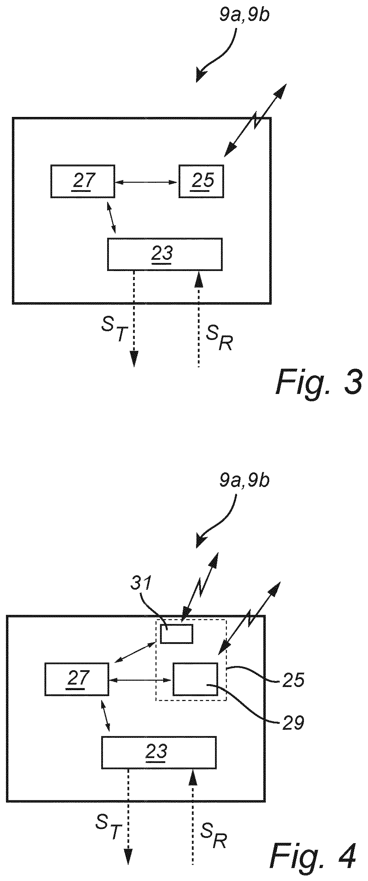

Fig 3 is a schematic illustration of a level measurement system 9a, 9b according to a first embodiment of the present invention. Referring to fig 3, this embodiment of the level measurement system comprises level sensing circuitry 23, wireless communication circuitry 25, and a controller 27. In this first example configuration, the level sensing circuitry 23 may be configured to generate a transmit signal S_{T}, transmit the transmit signal S_{T} towards a surface of the product in the tank 5A-B, and receive a reflection signal S_{R} resulting from reflection of the transmit signal S_{T} at the surface of the product. The level sensing circuitry 23 is further configured to determine the level of the product in the tank 5a-b based on a timing relation between the transmit signal S_{T} and the reflection signal S_{R}.

The controller 27 is coupled to the level sensing circuitry 23 and the wireless communication circuitry 25, and is configured to control the level sensing circuitry 23 to repeatedly measure the level of the product, and to repeatedly transmit signals indicative of the measured level of the product in the tank, using the wireless communication circuitry 25. The controller 27 is also configured to wirelessly receive, from the asset management system 1, an indication of a work order for filling a neighboring tank, which has been issued to an operator 11. The controller 27 is further configured to control, after having received the indication of the work order concerning the neighboring tank, the level sensing circuitry 23 to more often repeatedly measure the level of the product, and to more often repeatedly transmit signals indicative of the measured level of the product in the tank.

Fig 4 is a schematic illustration of a level measurement system 9a, 9b according to a second embodiment of the present invention. In this second embodiment of the invention, the wireless communication circuitry 25 comprises first wireless communication circuitry 29 configured to implement a first communication architecture adapted for relatively long range wireless communication; and second wireless communication circuitry 31 configured to implement a second communication architecture adapted for relatively short range wireless communication.

The first wireless communication circuitry 29 may thus be capable of wireless communication at a range that is beyond the capabilities of the second wireless communication circuitry 31. On the other hand, the second wireless communication circuitry 31 may require less power than the first communication circuitry, and the use of the second wireless communication circuitry 31 may be free.

The first wireless communication architecture may use at least one gateway for communication with the asset management system 1. Examples of the first wireless communication architecture may include LoRaWAN, Sigfox, Dash7, NB (Narrow Band) - IoT, and GSM etc. The second wireless communication architecture may rely on close range direct wireless communication. One suitable example of the second wireless communication architecture is BLE (Bluetooth Low Energy).

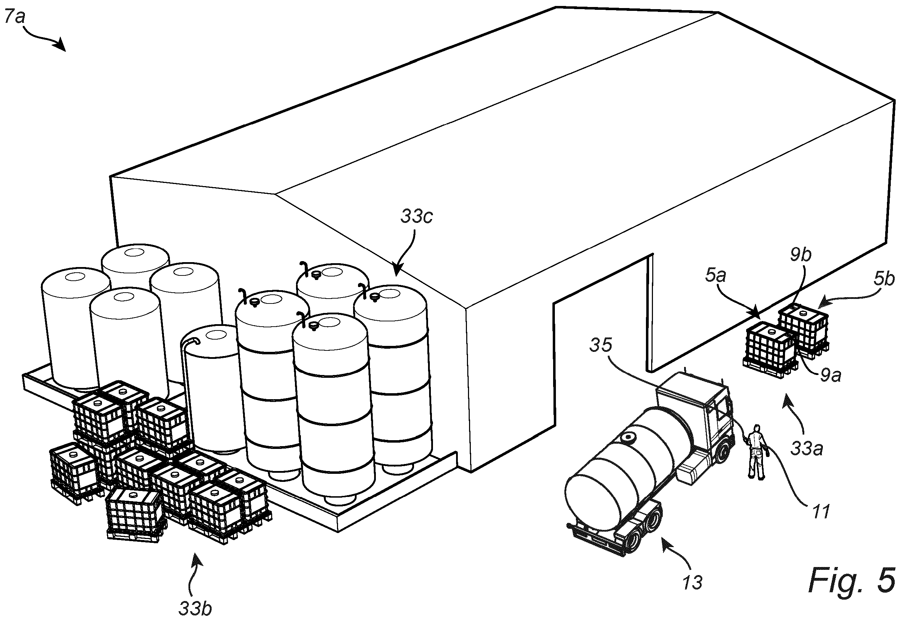

Fig 5 is an exemplary illustration, showing an operator 11 tasked by the asset management system 1 with fulfilling a work order at a site 7a with multiple tanks. At the example site 7a in fig 5, there are two groups 33a-b of IBC-tanks, and one group 33c of fixed storage tanks. In one of the groups 33a, which will be used to illustrate example embodiments of the present invention, there are two tanks 5a-b arranged close to each other. In the illustration of fig 5, the operator 11 has arrived at the site 7a and has stepped out of the mobile vessel 13 (tanker truck). In the operator's hand is a wireless operator device 35.

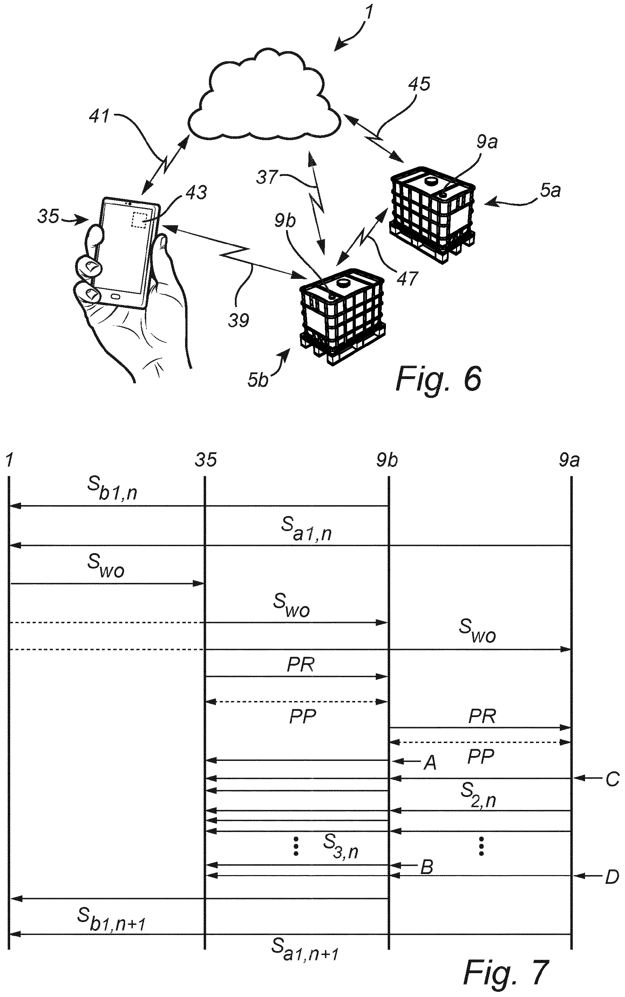

With this illustrative situation in mind, fig 6 schematically shows wireless communication involving the level measurement system 9a of a tank 5a, the level measurement system 9b of a neighboring tank 5b to be filled, an operator device 35, and the asset management system 1. Fig 6 shows long range wireless communication 37 between the first wireless communication circuitry 29 (please see fig 4) of the level measurement system 9b of the neighboring tank 5b to be filled and the asset management system 1, short range wireless communication 39 between the second wireless communication circuitry 31 of the level measurement system 9b and wireless communication circuitry 43 comprised in the wireless operator device 35, and long range wireless communication 41 (typically cellular connection) between the wireless operator device 35 and the asset management system 1. In addition, fig 6 schematically indicates long range wireless communication 45 between the first wireless communication circuitry 29 of the level measurement system 9a of the tank 5a, that is within a predefined distance from the neighboring tank 5b to be filled, and the asset management system 1. Fig 6 also includes an indication of short range wireless communication 47 between the level measurement system 9b of the neighboring tank 5b to be filled and the level measurement system 9a of the tank 5a.

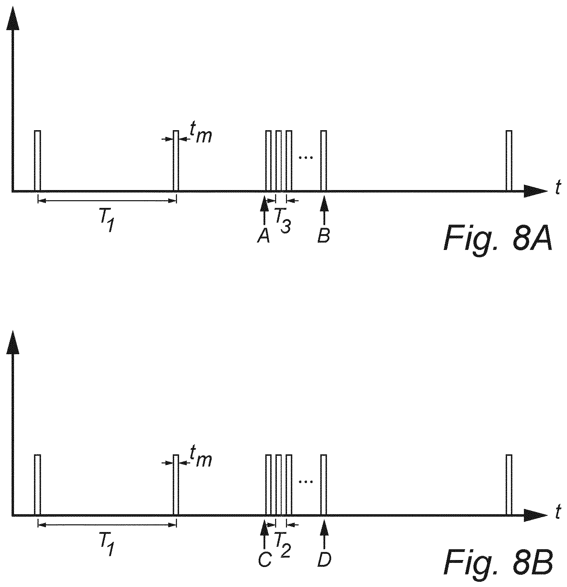

Operation of the level measurement systems 9a and 9b according to example embodiments of the present invention will now be described with reference to the exemplary interaction diagram in fig 7, and the timing diagrams for measurement operations in figs 8A-B.

Referring first to fig 7 and starting from the top of the interaction diagram, a signal Sb1,n is transmitted from the level measurement system 9b of the neighboring tank 5b to be filled to the asset management system 1, using the first wireless communication circuitry 29 (see fig 4) of the level measurement system 9b. Similarly, a signal Sa1,n is transmitted from the level measurement system 9a of the tank 5a. The signal Sb1,n from the neighboring tank to be filled 5b and the signal Sa1,n from the tank 5a are indicative of the levels of the product(s) in the two tanks, respectively. The levels of the product(s) in the two tanks 5a-b are currently periodically measured with a first measurement frequency. This is schematically illustrated in the left part of the timing diagram in each of figs 8A-B, where it is indicated that the level sensing circuitry 23 is activated during a measurement time period tm at a first interval T1 (time between consecutive measurements), corresponding to a first, relatively low, measurement frequency. Fig 8A schematically illustrates the measurement operations for the neighboring tank 5b to be filled. Fig 8B schematically illustrates the measurement operations for the tank 5a. At the end of a measurement time period tm, or after the end of the measurement time period, the controller 27 of the respective level measurement systems 9a, 9b may activate the first wireless communication circuitry 29 and transmit the above-mentioned respective signals Sb1,n, Sa1,n indicative of the level of the product to the asset management system 1. The first interval T1 may be more than one hour, such as one day, in order to save energy while keeping track of the level of product in each tank 5a, 5b at the asset management system 1.

Returning to fig 7, it could be assumed that the level of product in the neighboring tank 5b indicated by signal Sb1,n triggers the creation of a work order at the asset management system 1. For instance, the signal Sb1,n may indicate a level that is below a predefined threshold level. As is shown in fig 7, the asset management system 1 transmits, a signal SWO indicating a work order to the wireless operator device 35 and to the level measurement system 9b of the neighboring tank 5b to be filled. The signal indicating the work order received by the level measurement system 9b may be received directly or indirectly from the asset management system 1. In fig 7, this is indicated by the dotted portion of the arrow between the asset management system 1 and the level measurement system 9b of the neighboring tank 5b to be filled. As is also indicated in fig 7, the controller of the level measurement system 9a of the tank 5a, that is within the predefined distance from the tank 5b to be filled, receives from the asset management system 1, directly or indirectly, an indication, here also denoted by the signal SWO, of the work order for the filling of the neighboring tank 5b to be filled. Alternatively, the asset management system 1 may separately transmit a signal SWO indicating the work order to the wireless operator device 35, to the level measurement system 9a, and to the level measurement system 9b.

It should be pointed out that the indications (signals) provided from the asset management system 1 to the wireless operator device 35, and the respective level measurement systems 9a, 9b may be identical or different. For instance, the wireless operator device 35 may be provided with detailed information about the location 7a of the neighboring tank 5b to be filled, which product to fill the neighboring tank 5b with, and the amount of product. Furthermore, the wireless operator device 35 may be provided with suitable information for secure pairing with the second wireless communication circuitry 31 (see fig 4) comprised in the level measurement system 9a and/or with suitable information for secure pairing with the second wireless communication circuitry 31 (see fig 4) comprised in the level measurement system 9b. The level measurement system 9a and/or the level measurement system 9b may be provided with a simpler indication, which may, for example, only contain information that the work order has been created and suitable information for secure pairing with wireless communication circuitry comprised in the wireless operator device 35.

Referring additionally to fig 4, the controller 27 of the level measurement system 9b may control the second wireless communication circuitry 31 to participate in a pairing procedure with the wireless communication circuitry 43 comprised in the wireless operator device 35, to establish communication between the level measurement system 9b and the wireless operator device 35. As is schematically indicated in fig 7, the level measurement system 9b of the neighboring tank 5b to be filled may receive, using the second measurement circuitry 31, a paring request PR from the wireless operator device 35, resulting in a pairing procedure PP for establishing secure direct wireless connection between the wireless operator device 35 and the level measurement system 9b. Alternatively, the pairing may be initiated by the level measurement system 9b. In a similar fashion, the level measurement system 9a of the tank 5a may be paired with the wireless operator device 35, or - as is indicated in fig 6 and fig 7 - with the level measurement system 9b of the neighboring tank 5b to be filled.

At some point in time following receipt of the indication of the work order (in this case the signal SWO), the controller 27 of the level measurement system 9b of the neighboring tank 5b to be filled controls the level sensing circuitry 23 to start to periodically measure the level of the product in the neighboring tank 5b with a third measurement frequency, higher than the first measurement frequency represented by the first interval T1. Referring again to fig 8A, the timing of the start of the more frequent level measurement regime is indicated by the letter A. In this mode of operation of the level measurement system 9b, the level sensing circuitry 23 is activated during measurement time periods tm at a third interval T3 (time between consecutive measurements), corresponding to the above-mentioned third, relatively high, measurement frequency. At the end of a measurement time period, or after the end of the measurement time period, the controller 27 may activate the first wireless communication circuitry and transmit signals S3,n indicative of the level of the product. The third interval T3 may be less than one hour, such as one minute or less, in order to be able to detect the start a filling operation, and to track the filling operation with a reasonably low latency.

The start A of the more frequent level measurement regime may substantially coincide with the first transmission of more frequent wireless signals indicative of the measured levels. This is indicated by the letter A in fig 7. Alternatively, other events may trigger the start of the more frequent level measurement regime. Some such other events may be the time of receipt of the indication of the work order, initiation of the pairing procedure, or successful completion of the pairing procedure.

During measurement of the level of product in the neighboring tank 5b with the third measurement frequency (the third interval T3 between consecutive measurement operations), the controller 27 controls the level measurement system 9b to repeatedly transmit signals S3,n indicative of the measured level of the product to the wireless operator device 35, using the second wireless communication circuitry 31.

Focusing now on the operation of the level measurement system 9a of the tank 5a, at some point in time following receipt of the indication of the work order for filling the neighboring tank 5b to be filled (in this case the signal SWO), the controller 27 of the level measurement system 9a controls the level sensing circuitry 23 to start to periodically measure the level of the product in the tank 5a with a second measurement frequency, higher than the first measurement frequency represented by the first interval T1. Referring to fig 7, the timing of the start of the more frequent level measurement regime is indicated by the letter C. In this mode of operation of the level measurement system 9a, the level sensing circuitry 23 is activated during measurement time periods at a second interval T2 (time between consecutive measurements), corresponding to the above-mentioned second, relatively high, measurement frequency. At the end of a measurement time period, or after the end of the measurement time period, the controller 27 may activate the first wireless communication circuitry and transmit signals S2,n indicative of the level of product in the tank 5a. The second interval T2 may be less than one hour, such as one minute or less, in order to be able to detect the start of a filling operation. The signals S2,n indicative of the level of product in the tank 5a may be transmitted directly to the wireless operator device 35 or - as is indicated in fig 7 - to the wireless operator device 35 via the level measurement system 9b of the neighboring tank 5b to be filled.

In fig 7 and figs 8A-B, the timing of the start of the more frequent level measurement regime for the level measurement system 9a, indicated by the letter C, is shown to occur later than the start of the more frequent level measurement regime for the level measurement system 9b of the tank 5b to be filled, indicated by the letter A. It should be noted that the order between these events may be reversed.

Through the more frequent measurement of the level of product in the tank 5a, triggered by the indication of the work order to fill the neighboring tank 5b, it can promptly be detected if the operator 10 should start to fill the wrong tank (the tank 5a).

If signals indicative of the level of product in the tank 5a are transmitted to the wireless operator device 35 as is indicated in fig 7, the wireless operator device 35 may detect an increasing level of product in the tank 5a close to the tank 5b for which a work order for filling has been issued, and provide a signal indicative thereof - such as an operator alert signal - in response to the detected increasing level. Alternatively, the controller 27 of the level measurement system 9a of the tank 5a may be configured to analyze the results of the measurement operations, and only transmit a signal to the wireless operator device 35 when the measurement operations indicate an increasing level of product in the tank 5a.

The level measurement system 9b of the neighboring tank 5b to be filled may return to measuring with the first measurement frequency at, for example, the time indicated by the letter B in fig 7 and fig 8A. Similarly, the level measurement system 9a of the tank 5a may return to measuring with the first measurement frequency at, for example, the time indicated by the letter D in fig 7 and fig 8B. As is indicated in fig 7 and figs 8A-B, the level measurement system 9b of the neighboring tank 5b that was filled and the level measurement system 9a of the tank 5a then start to again measure the levels in the respective tanks 5a-b with the first measurement frequency, and transmit signals Sa1,n+1 and Sb1,n+1 to the asset management system 1.

The person skilled in the art realizes that the present invention by no means is limited to the preferred embodiments described above. On the contrary, many modifications and variations are possible within the scope of the appended claims.

## Claims

1. A level measurement system (9a), for measuring the level of a product in a tank (5a) being monitored by an asset management system (1), the level measurement system (9a) comprising:
level sensing circuitry (23) for measuring the level of the product;
wireless communication circuitry (25) for wireless communication; and
a controller (27) for controlling operation of the level measurement system (9a), the controller (27) being configured to:
control the level sensing circuitry (23) to periodically measure the level of the product with a first measurement frequency;
transmit a signal indicative of the measured level of the product, using the wireless communication circuity (25);
receive, from the asset management system (1) using the wireless communication circuitry (25), an indication of a work order for filling a neighboring tank (5b) within a predefined distance from the tank (5a); and
control, after having received the indication of the work order, the level sensing circuitry (23) to periodically measure the level of the product with a second measurement frequency, higher than the first measurement frequency.

2. The level measurement system (9a) according to claim 1, wherein the controller (27) is configured to provide, in response to a detection of an increasing level of product in the tank (5a), a signal indicative thereof.

3. The level measurement system (9a) according to claim 1 or 2, wherein the wireless communication circuitry (25) comprises:
first wireless communication circuitry (29) configured to implement a first communication architecture adapted for relatively long range wireless communication; and
second wireless communication circuitry (31) configured to implement a second communication architecture adapted for relatively short range wireless communication.

4. The level measurement system (9a) according to claim 3, wherein the controller (27) is configured to:
receive the indication of the work order for filling the neighboring tank (5b) using the first wireless communication circuitry (29).

5. The level measurement system (9a) according to claim 3 or 4, wherein the controller (27) is configured to:
control the second wireless communication circuitry (31) to participate in a pairing procedure with wireless communication circuitry (43) comprised in a wireless operator device (35) of an operator (11) tasked by the asset management system (1) to fulfill the work order, to establish communication between the level measurement system (9a) and the wireless operator device (35); and
transition the level sensing circuitry (23) from an inactive state to an active state.

6. The level measurement system (9a) according to claim 5, wherein the controller (27) is configured to:
control the level sensing circuitry (23) to periodically measure the level of the product with the second measurement frequency after initiation of the pairing procedure.

7. The level measurement system (9a) according to claim 3 or 4, wherein the controller (27) is configured to:
control the second wireless communication circuitry (31) to participate in a pairing procedure with wireless communication circuitry comprised in the neighboring tank (5b), to establish communication between the level measurement system (9a) and the neighboring tank (5b); and
transition the level sensing circuitry (23) from an inactive state to an active state.

8. The level measurement system (9a) according to claim 7, wherein the controller (27) is configured to:
control the level sensing circuitry (23) to periodically measure the level of the product with the second measurement frequency after initiation of the pairing procedure.

9. The level measurement system (9a) according to any one of the preceding claims, wherein the controller (27) is configured to:
receive a signal indicating that a level of product in the neighboring tank (5b) has increased; and
control, after having received the signal indicating that the level of product in the neighboring tank (5b) has increased, the level sensing circuitry (23) to go back to periodically measuring the level of the product with the first measurement frequency; and
transition the level sensing circuitry (23) from the active state to the inactive state.

10. The level measurement system (9a) according to any one of the preceding claims, wherein the controller (27) is configured to:
receive, from the asset management system (1) using the wireless communication circuitry (25), an indication of a work order for filling the tank (5a); and
control, after having received the indication of the work order, the level sensing circuitry (23) to periodically measure the level of the product with a third measurement frequency, higher than the first measurement frequency.

## Patentansprüche

1. Füllstandsmesssystem (9a) zum Messen des Füllstands eines Produkts in einem Tank (5a), der von einem Anlagenverwaltungssystem (1) überwacht wird, wobei das Füllstandsmesssystem (9a) umfasst:
eine Füllstandserfassungs-Schaltungsanordnung (23) zum Messen des Füllstands des Produkts;
eine Drahtloskommunikations-Schaltungsanordnung (25) zur Drahtloskommunikation; und
eine Steuerung (27) zum Steuern eines Betriebs des Füllstandsmesssystems (9a), wobei die Steuerung (27) eingerichtet ist zum:
Steuern der Füllstandserfassungs-Schaltungsanordnung (23), um den Füllstand des Produkts periodisch mit einer ersten Messfrequenz zu messen;
Übertragen eines Signals, das den gemessenen Füllstand des Produkts angibt, unter Verwendung der Drahtloskommunikations-Schaltungsanordnung (25);
Empfangen einer Arbeitsanweisung zum Befüllen eines benachbarten Tanks (5b) innerhalb einer vordefinierten Entfernung von dem Tank (5a) von dem Anlagenmanagementsystem (1) unter Verwendung der Drahtloskommunikations-Schaltungsanordnung (25); und
Steuern, nachdem die Arbeitsanweisung empfangen wurde, der Füllstandserfassungs-Schaltungsanordnung (23), um den Füllstand des Produkts periodisch mit einer zweiten Messfrequenz zu messen, die höher ist als die erste Messfrequenz.

2. Füllstandsmesssystem (9a) nach Anspruch 1, wobei die Steuerung (27) eingerichtet ist, um als Reaktion auf eine Erfassung eines steigenden Füllstands des Produkts in dem Tank (5a) ein Signal bereitzustellen, das dies angibt.

3. Füllstandsmesssystem (9a) nach Anspruch 1 oder 2, wobei die Drahtloskommunikations-Schaltungsanordnung (25) umfasst:
eine erste Drahtloskommunikations-Schaltungsanordnung (29), die eingerichtet ist, um eine erste Kommunikationsarchitektur zu implementieren, die für eine Drahtloskommunikation mit relativ großer Reichweite ausgelegt ist; und
eine zweite Drahtloskommunikations-Schaltungsanordnung (31), die eingerichtet ist, um eine zweite Kommunikationsarchitektur zu implementieren, die für eine Drahtloskommunikation mit relativ kleiner Reichweite ausgelegt ist.

4. Füllstandsmesssystem (9a) nach Anspruch 3, wobei die Steuerung (27) eingerichtet ist zum:
Empfangen der Arbeitsanweisung zum Befüllen des benachbarten Tanks (5b) unter Verwendung der ersten Drahtloskommunikations-Schaltungsanordnung (29).

5. Füllstandsmesssystem (9a) nach Anspruch 3 oder 4, wobei die Steuerung (27) eingerichtet ist zum:
Steuern der zweiten Drahtloskommunikations-Schaltungsanordnung (31), um an einem Kopplungsvorgang mit einer Drahtloskommunikations-Schaltungsanordnung (43) teilzunehmen, die in einem Drahtlosbetriebsgerät (35) eines Betreibers (11) enthalten ist, der von dem Anlagenverwaltungssystem (1) beauftragt wurde, die Arbeitsanweisung auszuführen, um eine Kommunikation zwischen dem Füllstandsmesssystem (9a) und dem Drahtlosbediengerät (35) herzustellen; und
Überführen der Füllstandserfassungs-Schaltungsanordnung (23) von einem inaktiven Zustand in einen aktiven Zustand.

6. Füllstandsmesssystem (9a) nach Anspruch 5, wobei die Steuerung (27) eingerichtet ist zum:
Steuern der Füllstandserfassungs-Schaltungsanordnung (23) nach Beginn des Kopplungsvorgangs, um den Füllstand des Produkts periodisch mit der zweiten Messfrequenz zu messen;

7. Füllstandsmesssystem (9a) nach Anspruch 3 oder 4, wobei die Steuerung (27) eingerichtet ist zum:
Steuern der zweiten Drahtloskommunikations-Schaltungsanordnung (31), um an einem Kopplungsvorgang mit der Drahtloskommunikations-Schaltungsanordnung teilzunehmen, die in dem benachbarten Tank (5b) enthalten ist, um eine Kommunikation zwischen dem Füllstandsmesssystem (9a) und dem benachbarten Tank (5b) herzustellen; und
Überführen der Füllstandserfassungs-Schaltungsanordnung (23) von einem inaktiven Zustand in einen aktiven Zustand.

8. Füllstandsmesssystem (9a) nach Anspruch 7, wobei die Steuerung (27) eingerichtet ist zum:
Steuern der Füllstandserfassungs-Schaltungsanordnung (23) nach Beginn des Kopplungsvorgangs, um den Füllstand des Produkts periodisch mit der zweiten Messfrequenz zu messen;

9. Füllstandsmesssystem (9a) nach einem der vorhergehenden Ansprüche, wobei die Steuerung (27) eingerichtet ist zum:
Empfangen eines Signals, das angibt, dass ein Füllstand des Produkts in dem benachbarten Tank (5b) gestiegen ist; und
Steuern, nachdem das Signal empfangen wurde, das angibt, dass der Füllstand des Produkts in dem benachbarten Tank (5b) gestiegen ist, der Füllstandserfassungs-Schaltungsanordnung (23) dazu, wieder dazu überzugehen, den Füllstand des Produkts periodisch mit der ersten Messfrequenz zu messen; und
Überführen der Füllstandserfassungs-Schaltungsanordnung (23) von dem aktiven Zustand in den inaktiven Zustand.

10. Füllstandsmesssystem (9a) nach einem der vorhergehenden Ansprüche, wobei die Steuerung (27) eingerichtet ist zum:
Empfangen einer Arbeitsanweisung zum Befüllen des Tanks (5a) von dem Anlagenmanagementsystem (1) unter Verwendung der Drahtloskommunikations-Schaltungsanordnung (25); und
Steuern, nachdem die Arbeitsanweisung empfangen wurde, der Füllstandserfassungs-Schaltungsanordnung (23), um den Füllstand des Produkts periodisch mit einer dritten Messfrequenz zu messen, die höher ist als die erste Messfrequenz.

## Revendications

1. Système de mesure de niveau (9a), destiné à mesurer le niveau d'un produit dans un réservoir (5a) surveillé par un système de gestion des ressources (1), le système de mesure de niveau (9a) comprenant :
un circuit de détection de niveau (23) destiné à mesurer le niveau du produit ;
un circuit de communication sans fil (25) pour une communication sans fil ; et
un dispositif de commande (27) destiné à commander le fonctionnement du système de mesure de niveau (9a), le dispositif de commande (27) étant configuré pour :
commander le circuit de détection de niveau (23) pour mesurer périodiquement le niveau du produit avec une première fréquence de mesure ;
transmettre un signal indiquant le niveau du produit mesuré, à l'aide du circuit de communication sans fil (25) ;
recevoir, à partir du système de gestion des ressources (1) à l'aide du circuit de communication sans fil (25), une indication d'un ordre de travail pour le remplissage d'un réservoir voisin (5b) à une distance prédéfinie du réservoir (5a) ; et
commander, après réception de l'indication de l'ordre de travail, le circuit de détection de niveau (23) pour mesurer périodiquement le niveau du produit avec une deuxième fréquence de mesure, laquelle est supérieure à la première fréquence de mesure.

2. Système de mesure de niveau (9a) selon la revendication 1, dans lequel le dispositif de commande (27) est configuré pour fournir, en réponse à une détection d'un niveau croissant de produit dans le réservoir (5a), un signal indiquant celui-ci.

3. Système de mesure de niveau (9a) selon la revendication 1 ou 2, dans lequel le circuit de communication sans fil (25) comprend :
un premier circuit de communication sans fil (29) configuré pour mettre en œuvre une première architecture de communication adaptée pour une communication sans fil à portée relativement longue ; et
un deuxième circuit de communication sans fil (31) configuré pour mettre en œuvre une deuxième architecture de communication adaptée pour une communication sans fil à portée relativement courte.

4. Système de mesure de niveau (9a) selon la revendication 3, dans lequel le dispositif de commande (27) est configuré pour :
recevoir l'indication de l'ordre de travail pour le remplissage du réservoir voisin (5b) à l'aide du premier circuit de communication sans fil (29).

5. Système de mesure de niveau (9a) selon la revendication 3 ou 4, dans lequel le dispositif de commande (27) est configuré pour :
commander le deuxième circuit de communication sans fil (31) de manière à le faire participer à une procédure d'association avec le circuit de communication sans fil (43) compris dans un dispositif d'opérateur sans fil (35) d'un opérateur (11) chargé par le système de gestion des ressources (1) de remplir l'ordre de travail, pour établir une communication entre le système de mesure de niveau (9a) et le dispositif d'opérateur sans fil (35) ; et
faire passer le circuit de détection de niveau (23) d'un état inactif à un état actif.

6. Système de mesure de niveau (9a) selon la revendication 5, dans lequel le dispositif de commande (27) est configuré pour :
commander le circuit de détection de niveau (23) pour mesurer périodiquement le niveau du produit avec la deuxième fréquence de mesure après l'initiation de la procédure d'association.

7. Système de mesure de niveau (9a) selon la revendication 3 ou 4, dans lequel le dispositif de commande (27) est configuré pour :
commander le deuxième circuit de communication sans fil (31) de manière à le faire participer à une procédure d'association avec un circuit de communication sans fil compris dans le réservoir voisin (5b), afin d'établir une communication entre le système de mesure de niveau (9a) et le réservoir voisin (5b) ; et
faire passer le circuit de détection de niveau (23) d'un état inactif à un état actif.

8. Système de mesure de niveau (9a) selon la revendication 7, dans lequel le dispositif de commande (27) est configuré pour :
commander le circuit de détection de niveau (23) pour mesurer périodiquement le niveau du produit avec la deuxième fréquence de mesure après l'initiation de la procédure d'association.

9. Système de mesure de niveau (9a) selon l'une quelconque des revendications précédentes, dans lequel le dispositif de commande (27) est configuré pour :
recevoir un signal indiquant qu'un niveau du produit dans le réservoir voisin (5b) a augmenté ; et
après avoir reçu le signal indiquant que le niveau du produit dans le réservoir voisin (5b) a augmenté, commander le circuit de détection de niveau (23) pour revenir à la mesure périodique du niveau du produit avec la première fréquence de mesure ; et
faire passer le circuit de détection de niveau (23) de l'état actif à l'état inactif.

10. Système de mesure de niveau (9a) selon l'une quelconque des revendications précédentes, dans lequel le dispositif de commande (27) est configuré pour :
recevoir, à partir du système de gestion des ressources (1) à l'aide du circuit de communication sans fil (25), une indication d'un ordre de travail pour le remplissage du réservoir (5a) ; et
commander, après avoir reçu l'indication de l'ordre de travail, le circuit de détection de niveau (23) pour mesurer périodiquement le niveau du produit avec une troisième fréquence de mesure, plus élevée que la première fréquence de mesure.
